# EUROPEAN PATENT SPECIFICATION

(11) **EP 2 625 948 B1**
(45) Date of publication and mention of the grant of the patent: **08.04.2015**
(21) Application number: 13154295.3
(22) Date of filing: 06.02.2013
(51) Int. Cl.: A01D 46/26

(54) **Shaking device**
Schüttelvorrichtung
Appareil secoueur

(30) Priority: 09.02.2012 IT BO20120064
(43) Date of publication of application: 14.08.2013
(73) Proprietor: TEKNA S.R.L, 72017 Ostuni (BR) (IT)
(72) Inventor: Caroli, Antonio, 72017 Ostuni (BR) (IT)
(74) Representative: Negrini, Elena

(56) References cited:
- EP-A1- 2 042 020
- EP-A2- 0 172 792
- EP-A2- 1 277 391
- DE-U1-202004 007 230

## Description

The present invention relates to the field concerning the agricultural tools and it refers to a shaking device particularly suitable to cause the falling down of olives, other fruits, flowers, berries and the like.

Manuals motorized shakers are known having a rod placed in reciprocating linear motion by a connecting rod driven by the motor; one end of the reciprocating rod is provided with a hook intended to engage with a branch to shake it and to cause the falling of its olives or other fruits.

A disadvantage of such known shakers consists in that they transmit to the users very strong stresses that impair the comfort and that can cause physical damage.

DE 202004007230 describes shakers equipped with rotating counterweights assigned to impart to the tool handle some accelerations in phase opposition with respect to those produced by the rod reciprocating motion, with the features of the preamble of claim 1.

A disadvantage of such shakers with rotating counterweights consists in that said masses are spaced apart and offset generating torque moments that, by transmitting to users' limbs, can be tiresome or even harmful.

Another disadvantage of this shakers type with rotating counterweights consists in that they do not adapt to different rotation speeds and/or to hooks or rods having different weight and characteristics.

An object of the present invention is to propose a shaking device able to reduce the linear stresses and the alternate torques transmitted to the user.

Another object of the present invention is to propose a device able to increase the balancing thrust provided by the masses according to the speed increasing.

Further object is to allow to adjust the balancing thrust, for example to adapt the device to different hooks or rods.

The characteristics of the invention are highlighted in the following with particular reference to the accompanying drawings, in which:
- Fig. 1 shows a side view of the shaking device object of the present invention wherein some parts have removed to better illustrate others;
- Fig. 2 shows an enlarged top view of a detail of Fig. 1;
- Fig. 3 shows a side view of the detail of Fig. 2 wherein some parts have been removed to better illustrate others;
- Fig. 4 shows a cross section view along the line IV-IV of Fig. 3;
- Fig. 5 shows an axonometric view of the detail of Fig. 2;
- Fig. 6 shows an exploded view of the detail of Fig. 2;
- Figs. 7 to 9 show axonometric views of the detail of Fig. 2, wherein a rod has been removed, in respective operating conditions of forward thrust, backward thrust and null action along the thrust line;
- Fig. 10 shows a side view of a variant of the detail of Fig. 2, wherein a rod has been removed, which provides two mobile masses one of which is visible in a condition of maximum distance from its rotation axis;
- Fig. 11 shows a cross section view along the plane XI-XI of Fig. 10;
- Fig. 12 shows a top view of the variant of Fig. 10 wherein the two mobile masses are visible at the maximum distance from the rotation axis;
- Fig. 13 shows a side view of the variant of Fig. 10 wherein the two mobile masses are at the minimum maximum distance from the rotation axis;
- Figs. 14 and 15 show isometric views, from respective points of view, of the variant of Fig. 10.

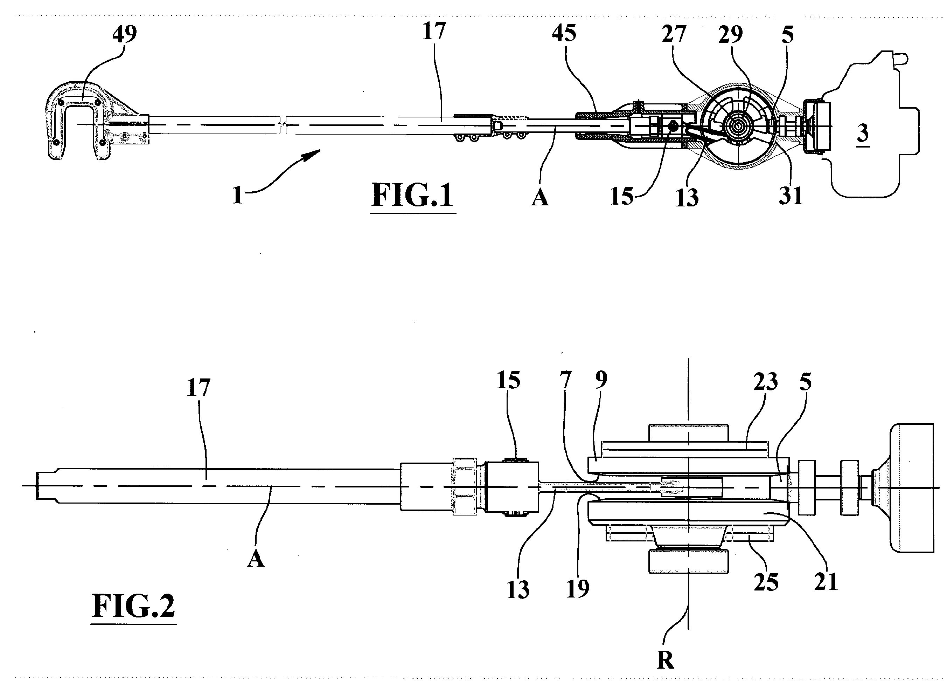

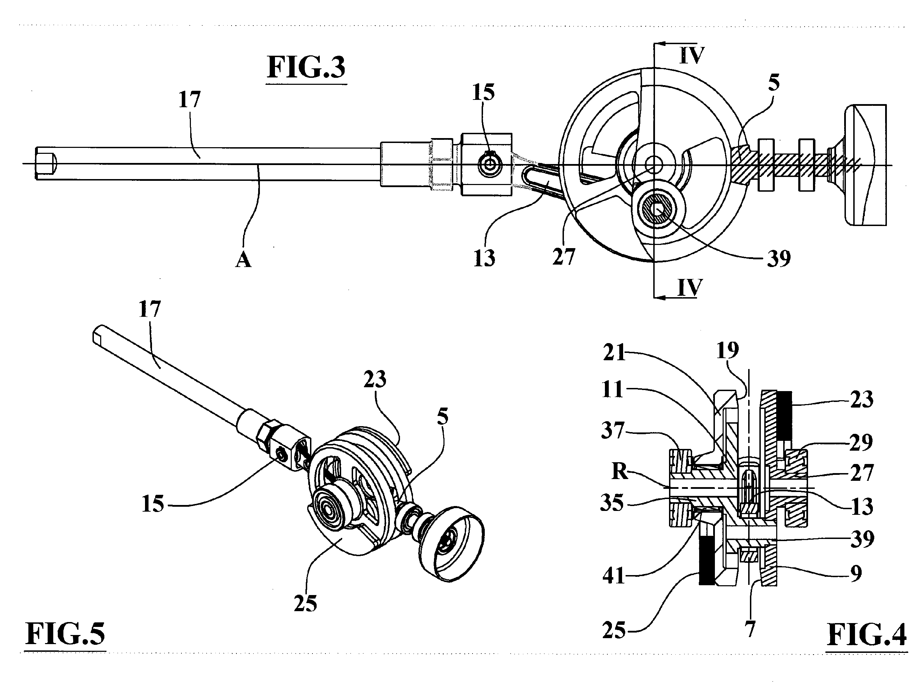

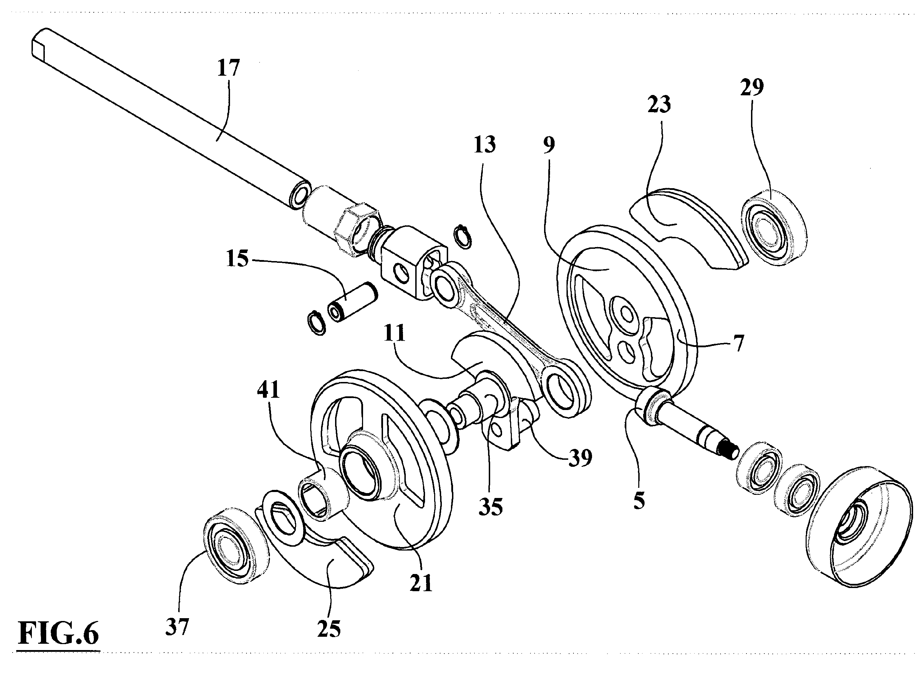

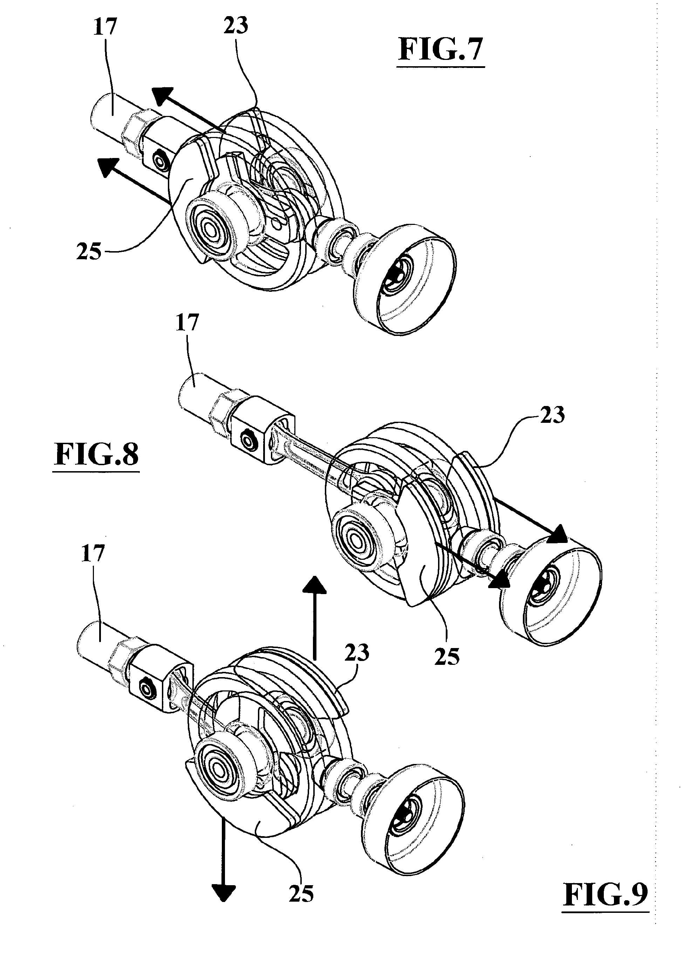

With reference to Figs. 1-9, number 1 indicates the shaking device object of the present invention comprising an engine 3, preferably of internal combustion or electric or pneumatic type, whose output shaft is connected, by means of engaging means, preferably a centrifugal clutch, to a rotation shaft mounted on a bearing means, preferably consisting of ball bearings or roller bearings, housed in seats carried out in a crankcase body 31 of the device 1, for example made of cast aluminium or synthetic material, eventually reinforced with fibres. The rotation shaft end opposite to the engaging means is rigidly fixed to a bevel gear pinion 5.

The pinion 5 is engaged to a tapered first gear ring 7 of a first wheel 9 which is coaxially fixed to a crankshaft means 11. Said first wheel 9 and crankshaft means 11 have the same rotation geometric axis R.

The fastening between the first wheel 9 and the crankshaft means 11 is carried out by a connecting rod pin 39 assigned to be engaged to a big end of a connecting rod 13 whose small end is connected to a pin 15 connected to a pole 17, whose end, opposite to the pin 15, supports a hook means 49.

The device 1 also comprises a tubular guide 45, made of die-casted aluminium or synthetic material, eventually fibre reinforced, fixed to the crankcase body 31. The longitudinal geometric axis of the tubular guide 45 coincides with the longitudinal axis of the pole 17 which slides, in reciprocating linear motion, in it determining the sliding straight line A, that is the translation axis of the pole 17 itself. The tubular guide 45 may be internally provided with bearings or sliders of low friction material, such as nylon or Teflon, assigned to reduce the sliding friction of the pole 17 animated by a reciprocating motion along the action straight line A. Said action line A crosses the geometric rotation axis R of the first wheel 9 and of the crankshaft means 11 intersecting it.

The pinion 5 is also engaged to a second gear ring 19, equal or symmetrical to the first gear ring 7 and facing it 7. The second gear ring 19 belongs to a second wheel 21 which faces the first wheel 9. This second wheel 21 has the same geometric rotation axis R of the first wheel 9 and rotates at the same speed of the latter 9 but in the opposite direction.

Each first 9 and second 21 wheel has a respective mass means, first 23 and second 25, for example made of iron or lead.

The mass means are positioned on the outer lateral faces, on opposite sides, of the respective wheels 9, 10 so that when they intersect at a point on the action line A behind the geometric rotation axis R or near to the engine, the pole 17 is in the condition of maximum distance from the geometric rotation axis R which is at its top dead centre. When the mass means 23, 25 intersect at a point on the action line A in front of the geometric rotation axis R or to the maximum distance from the engine, the pole 17 is in the condition of minimum distance from the geometric rotation axis R or in its bottom dead centre. In other words, the mass means 23, 25 are placed in such a way that, as a result of their rotation with the respective wheels 9, 21, cross each other along the straight action line A and in phase opposition with respect to the reciprocating motion of the pole 17.

The first 23 and second 25 mass means are shaped as a ring sector. The pinion 5 has a maximum diameter ranging between 1/3 and 1/20, preferably about 1/5, of the outer radius of the wheels 9, 21 which are very thin so as to minimize the distance between the mass means.

The first wheel 9 is provided with a first rotation shaft 27 facing outwards and bearing a respective first bearing means 29, for example consisting of a ball, roller or needle bearings, housed in a respective seat of the device 1 crankcase body 31. The crankshaft means 11 is provided with a second rotation shaft 35 facing outwards and bearing a respective second bearing means 37, for example consisting of a ball bearing, housed in a respective seat of the crankcase body 31. The second wheel 21 is connected in a freely revolving manner to the second rotation shaft 35 by means of a third bearing means 41.

The rotation geometrical axis of the first 27 and second 37 rotation shafts, of the first 29, second 37 and third 41 bearing means and the second wheel 21 coincide with the geometric rotation axis R of the first wheel 9 and of the crankshaft means 11.

The longitudinal geometrical axis of the connecting rod pin 39 is parallel to and spaced apart from the geometric rotation axis R.

The operation of the device 1 provides that the engine 3 keeps the hook means 49 in reciprocating linear motion allowing it to shake bushes, branches and plants in general while the opposed rotations, and in phase opposition with respect to the reciprocating motion of the hook means 49, of the first 23 and second 25 mass means reduces the stresses to which it is subjected the user of the device 1.

The pole 17 comprises a set of poles mutually engaged and bearing at one end a connector for supporting the pin 15 and at the opposite and a hook means 49 assigned to engage branches and to cause the falling down of respective olives or other fruits. The invention provides that the engaged poles and hook means 49 are mutually fixed in a permanent or interchangeable way to allow to modify the characteristics of the device, for example length and stiffness of the pole and dimensions of the fixing means, according to the operations to be performed.

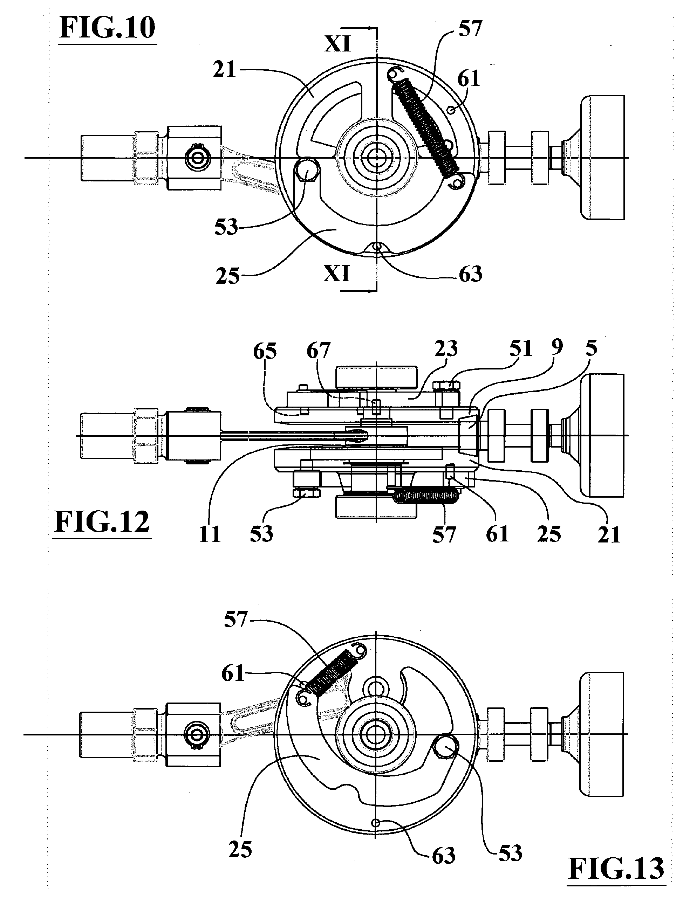

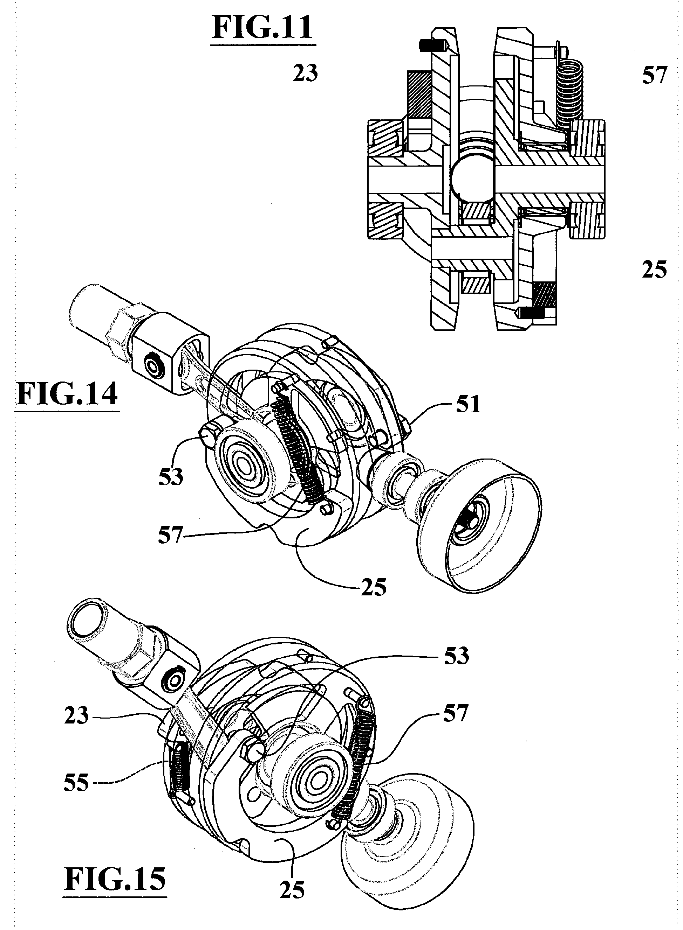

In the variant of Figs. 10-15, each first 23 and second 25 mass means is connected to the respective first 9 or second 21 wheel in an adjustable way to vary or adjust the distance of the first 23 and second 25 mass means centres of mass from the geometric rotation axis R.

The ends that precede, or follow, the rotations of the first 23 and second 25 mass means have respective pass-through seats for respective first 51 and second 53 swivelling pins which allow the freely swivelling connection of the first 23 and second 25 mass means respectively in respect to the first 9 and second 21 wheel.

Each first 9 and second 21 wheel is provided with respective first 55 and second 57 adjustment means of the swivelling angle of the first 23 and second 25 mass means. These first 55 and second 57 adjustment means consist of elastic means, for example in two coil springs tension operating, each acting between the respective first 9 or second 21 wheel and the respective first 23 or second 25 mass means.

Each first 9 or second 21 wheel has a respective pair of first 61, 63 and seconds 65, 67 stops. Each pair is intended to abut the respective first 23 or second 25 mass means locking it in conditions of maximum and minimum distance of the respective centre of gravity from the geometric rotation axis R.

Each spring of the adjustment means 55, 57 acts on the respective mass means 23, 25 transmitting it centripetal elastic force contrasting the centrifugal movement of the mass means 23, 25 centres of mass. The magnitude of the centripetal elastic forces is proportional to the rotation speed of the wheels 9, 21. In other words the springs ensure that the mass means open wide proportionally to the rotation speed providing a balancing effect, or mitigation of the stresses transmitted to the user, which increases according to the increasing rotation speed of the engine and of course to the decreasing oscillation period of the hook means.

Alternatively the invention provides that the first 55 and second 57 adjustment means consist of a screw means, interlocking or multiple adjustable stop, associated with the first 9 and second 21 wheel to lock the first 23 or seconds 25 mass means with the corresponding centres of mass at certain distances from the geometric rotation axis R. For example each screw means could comprise a threaded pin having an end connected to the respective mass means in a freely swivelling way around the axis of the screw itself and around an axis perpendicular to the swivelling plane of the mass means; this pin may be engaged in a nut screw fixed to the respective wheel in a freely swivelling way around a rotation axis perpendicular to the wheel itself. In this way it would be possible, for example, to adjust the divarication of the mass means to adapt their effect to the change of the weight of the rod and/or of the replaced hook means or the type of branches to be shaken.

An advantage of the present invention is to provide a shaking device able to reduce the linear stresses and the alternate torques transmitted to the user.

Another advantage of the present invention is to provide a device able to increase the balancing thrust provided by the masses according to the speed increasing.

Further advantage is to provide a device that allows to adjust the balancing thrust, for example to adapt the device to different hooks or rods.

## Claims

1. Shaking device comprising an engine (3) rotating a pinion (5) engaged to a first gear ring (7) of a first wheel (9) coaxially fixed to a crankshaft means (11) connected to a big end of a connecting rod (13) whose small end is connected to a pin (15) connecting said small end to a pole (17) having a hook means (49) and constrained to reciprocate along a sliding straight line (A) laying on the longitudinal axis of the pole (17) and crossing the rotation geometric axis (R) of the first wheel (9) and of the crankshaft means (11); the pinion (5) further engages a second gear ring (19), equal or symmetric to the first gear ring (7), of a second wheel (21) having the same rotation geometric axis of the first wheel (9) and facing the latter (9); each first (9) and second (21) wheel has a respective first (23) and second (25) mass means positioned in a way that, when they rotate together with the respective wheels (9, 21), they cross each other approximately along the sliding straight line (A) and that their motion is in phase opposition with respect to the reciprocating of the pole (17); said device (1) being **characterized in that** the first wheel (9) has a first rotation shaft (27) outward protruding and having a respective first bearing means (29) housed in a respective seat of a device (1) crankcase body (31); and **in that** the crankshaft means (11) has a second rotation shaft (35) outward protruding and having a respective second bearing means (37) housed in a respective seat of the crankcase body (31), the crankshaft means (11) further has a connecting rod pin (39), for the big end of a connecting rod (13), having an end fixed to the first wheel (9); and **in that** the second wheel (21) is connected in a freely revolving way to the second rotation shaft (35) by a third bearing means (41); the rotation geometric axis of the first (27) and second (37) rotation shaft, of the first (29), second (37) and third (41) bearing means and of the second wheel (21) coincide with the rotation geometric axis (R) of the first wheel (9) and of the crankshaft means (11); the longitudinal geometric axis of the connecting rod pin (39) is parallel and spaced out from the rotation geometric axis (R).

2. Device according to claim 1 **characterized in that** the first (23) and second (25) mass means are circular ring sector shaped and they are fixed to the wheel (9, 21) opposite side (9, 21); the pinion (5) has a maximum diameter ranging between 1/3 and 1/20, preferably about 1/5, of the wheel (9, 21) outer radius.

3. Device according to claim 1 **characterized in** comprising a tubular guide (45) fixed to the crankcase body (31) in a way that its longitudinal geometric axis coincides with the sliding straight line (A) and assigned to the pole (17) sliding movement and **in that** the pinion (5) has a respective rotation shaft supported by bearings means housed in seats carried out into the crankcase body (31), said pinion (5) is connected to the engine (3) by clutch means, preferably of centrifugal clutch kind.

4. Device according to any of the previous claims **characterized in that** each first (23) and second (25) mass means is connected to the respective first (9) or second (21) wheel in an adjustable way to change or set the distance between the centres of mass of the first (23) and second (25) mass means from the rotation geometric axis (R).

5. Device according to claim 4 **characterized in that** the ends of the first (23) and second (25) mass means that anticipate or follow the rotations of the same mass means (23, 25) have respective pass through seats for respective first (51) and second (53) swivel pins to freely swivelling connect the first (23) and second (25) mass means to the respective first (9) and second (21) wheel, each wheel has first (55) and second (57) adjustment means for adjusting the swivelling angle of the first (23) and second (25) mass means.

6. Device according to claim 5 **characterized in that** the first (55) and second (57) adjustment means consist of elastic means each one acting between a respective first (9) or second (21) wheel and the respective first (23) or second (25) mass means and having centripetal elastic force contrasting the centrifugal movement of the mass means (23, 25) centres of mass.

7. Device according to claim 6 **characterized in that** each first (9) or second (21) wheel has a respective first (61, 63) and second (65, 67) pair of stops, each pair is assigned to meet the respective first (23) or second (25) mass means stopping the latter at maximum or minimum distance condition of the respective centre of mass from the rotation geometric axis (R).

8. Device according to claim 6 **characterized in that** the first (55) and second (57) adjustment means consist of one among: screw means, fixed joint means or adjustable multiple stop means associated to the first (9) or second (21) wheel to lock the first (23) or second (25) mass means with the respective centre of mass at predefined distances from the rotation geometric axis (R).

9. Device according to any of the previous claims **characterized in that** the pole (17) has a set of rods mutually engaged and having, at an end, a pin (15) support connector and at the opposite end the hook means (49) assigned to meet branches to cause the falling down of the olives or other fruits; the engaged rods and the hook means (49) being each other fixed or interchangeable.

## Patentansprüche

1. Schüttelvorrichtung umfassend einen Motor (3), der ein Ritzel (5) dreht, wobei das Ritzel (5) mit einem ersten Zahnkranz (7) eines ersten Rades (9) in Eingriff steht, wobei das erste Rad (9) an einem Kurbelwellenmittel (11) koaxial befestigt ist, wobei das Kurbelwellenmittel (11) mit einem großen Ende eines Verbindungsstabs (13) verbunden ist, dessen schmales Ende mit einem Stift (15) verbunden ist, der das schmale Ende mit einer Stange (17) mit einem Hakenmittel (49) verbindet und der gezwungen ist, sich entlang einer gleitenden geraden Linie (A) hin und her zu bewegen, die auf der Längsachse der Stange (17) liegt und die geometrische Drehachse (R) des ersten Rades (9) und des Kurbelwellenmittels (11) kreuzt, wobei
das Ritzel (5) weiterhin mit einem zweiten Zahnkranz (19) eines zweiten Rades (21) mit der gleichen geometrischen Drehachse des ersten Rades (9) und gegenüberliegend dem Letzteren (9) in Eingriff steht, wobei der zweite Zahnkranz (19) gleich oder symmetrisch zum ersten Zahnkranz (7) ist, wobei
jedes erste (9) und zweite Rad (21) ein entsprechendes erstes (23) und zweites Massemittel (25) aufweist, das auf eine Weise positioniert ist, dass, wenn sie miteinander mit den entsprechenden Rädern (9, 21) drehen, sie einander ungefähr entlang der gleitenden geraden Linie (A) kreuzen, und dass ihre Bewegung in Gegenphase in Bezug auf die Hin- und Her-Bewegung der Stange (17) erfolgt, und
die Vorrichtung (1) ist **dadurch gekennzeichnet, dass** das erste Rad (9) eine erste Drehwelle (27) aufweist, die nach außen vorsteht und ein entsprechendes erstes Lagermittel (29) umfasst, das in einem entsprechenden Sitz eines Kurbelgehäusekörpers (31) der Vorrichtung (1) untergebracht ist,
und dadurch, dass das Kurbelwellenmittel (11) eine zweite Drehwelle (35) aufweist, die nach außen vorsteht und ein entsprechendes zweites Lagermittel (37) aufweist, das in einem entsprechenden Sitz des Kurbelgehäusekörpers (31) untergebracht ist, wobei das Kurbelwellenmittel (11) weiterhin einen Verbindungsstabstift (39) für das große Ende eines Verbindungsstabs (13) aufweist, wobei ein Ende des Verbindungsstabstifts (39) am ersten Rad (9) befestigt ist,
und dadurch, dass das zweite Rad (21) auf eine frei drehbare Weise mit der zweiten Drehwelle (35) durch ein drittes Lagermittel (41) verbunden ist,
wobei die geometrische Drehachse der ersten (27) und der zweiten Drehwelle (37) des ersten (29), des zweiten (37) und des dritten Lagermittels (41) sowie des zweiten Rades (21) mit der geometrischen Drehachse (R) des ersten Rades (9) und des Kurbelwellenmittels (11) übereinstimmen,
und wobei die geometrische Längsachse des Verbindungsstabstifts (39) parallel zu und beabstandet von der geometrischen Drehachse (R) ist.

2. Vorrichtung gemäß Patentanspruch 1, **dadurch gekennzeichnet, dass** das erste (23) und das zweite Massemittel (25) die Form eines kreisförmigen Ringabschnitts aufweisen und dass sie an dem Rad (9, 21) an entgegengesetzten Seiten (9, 21) befestigt sind, wobei das Ritzel (5) einen maximalen Durchmesser aufweist, der zwischen 1/3 und 1/20, vorzugsweise ungefähr 1/5 des Außendurchmessers des Rades (9, 21) liegt.

3. Vorrichtung gemäß Patentanspruch 1, **dadurch gekennzeichnet, dass** sie eine rohrförmige Führung (45) aufweist, die am Kurbelgehäusekörper (31) auf eine Weise befestigt ist, dass die geometrische Längsachse mit der gleitenden geraden Linie (A) zusammenfällt und der gleitenden Bewegung der Stange (17) zugeordnet ist, und dadurch, dass das Ritzel (5) eine entsprechende Drehwelle aufweist, die durch Lagermittel gestützt wird, wobei die Lagermittel in Sitzen untergebracht sind, die im Kurbelgehäusekörper (31) ausgeführt sind, wobei das Ritzel (5) mit dem Motor (3) durch Kupplungsmittel, vorzugsweise vom Zentrifugalkupplungstyp, verbunden ist.

4. Vorrichtung gemäß einem der vorhergehenden Patentansprüche, **dadurch gekennzeichnet, dass** jedes erste (23) und zweite Massemittel (25) mit dem entsprechenden ersten (9) oder zweiten Rad (21) auf eine einstellbare Weise verbunden ist, um den Abstand zwischen den Massezentren des ersten (23) und des zweiten Massemittels (25) der geometrischen Drehachse (R) zu ändern oder festzulegen.

5. Vorrichtung gemäß Patentanspruch 4, **dadurch gekennzeichnet, dass** die Enden des ersten (23) und des zweiten Massemittels (25), die die Drehung desselben Massemittels (23, 25) vorwegnehmen oder ihr folgen, entsprechende Durchgangssitze für entsprechende erste (51) und zweite Schwenkstifte (53) aufweisen, um das erste (23) und das zweite Massemittel (25) mit dem entsprechenden ersten (9) und zweiten Rad (21) freischwenkend zu verbinden, wobei jedes Rad ein erstes (55) und ein zweites Einstellmittel (57) zum Einstellen des Schwenkwinkels des ersten (23) und des zweiten Massemittels (25) aufweist.

6. Vorrichtung gemäß Patentanspruch 5, **dadurch gekennzeichnet, dass** das erste (55) und das zweite Einstellmittel (57) aus elastischen Mitteln besteht, die jeweils zwischen einem entsprechenden ersten (9) oder zweiten Rad (21) und dem entsprechenden ersten (23) oder zweiten Massemittel (25) agieren und eine zentripetalelastische Kraft aufweisen, die der Zentrifugalbewegung des Massezentrums des Massemittels (23, 25) entgegenwirkt.

7. Vorrichtung gemäß Patentanspruch 6, **dadurch gekennzeichnet, dass** das erste (9) oder das zweite (21) Rad ein entsprechendes erstes (61, 63) und zweites Paar Anschläge (65, 67) aufweist, wobei jedes Paar ausgestaltet ist, um das entsprechende erste (23) oder zweite Massemittel (25) zu treffen, um Letzteres beim Maximal- oder Minimalabstandszustand des entsprechenden Massezentrums von der geometrischen Drehachse (R) zu stoppen.

8. Vorrichtung gemäß Patentanspruch 6, **dadurch gekennzeichnet, dass** das erste (55) und das zweite Einstellmittel (57) besteht aus einem von: einem Schraubenmittel, einem befestigten Verbindungsmittel oder einem einstellbaren Mehrfachanschlagmittel, das dem ersten (9) oder dem zweiten Rad (21) zugeordnet ist, um das erste (23) oder zweite Massemittel (25) mit dem entsprechenden Massezentrum in vordefinierten Abständen von der geometrischen Drehachse (R) zu verriegeln.

9. Vorrichtung gemäß einem der vorhergehenden Patentansprüche, **dadurch gekennzeichnet, dass** die Stange (17) einen Satz von Stäben aufweist, die wechselseitig miteinander in Eingriff stehen und an einem Ende einen Stift-Unterstützungsverbinder (15) und an dem entgegengesetzten Ende das Hakenmittel (49) aufweisen, das gestaltet ist, um Zweige zu treffen, um das Herunterfallen von Oliven oder anderen Früchten zu bewirken, wobei die in Eingriff stehenden Stäbe und das Hakenmittel (49) aneinander befestigt oder auswechselbar sind.

## Revendications

1. Dispositif secoueur comprenant un moteur (3) qui fait tourner un pignon (5) mis en prise avec une première couronne dentée (7) d'une première roue (9) fixée de manière coaxiale à des moyens formant vilebrequin (11) connectés à une tête de bielle d'une bielle (13) dont le pied de bielle est connecté à une broche (15) qui connecte ledit pied de bielle à une perche (17) qui présente des moyens formant crochet (49), et est contraint à un mouvement de va-et-vient le long d'une ligne droite coulissante (A) qui se situe sur l'axe longitudinal de la perche (17) et qui croise l'axe géométrique de rotation (R) de la première roue (9) et des moyens formant vilebrequin (11); le pignon (5) vient en outre en prise avec une seconde couronne dentée (19), identique ou symétrique par rapport à la première couronne dentée (7), d'une seconde roue (21) qui présente le même axe géométrique de rotation que celui de la première roue (9) et qui fait face à cette dernière (9) ; chacune des première (9) et seconde (21) roues présente des premiers (23) et des seconds (25) moyens respectifs formant masse positionnés de telle façon que, quand ils tournent avec les roues respectives (9, 21), ils se croisent l'un l'autre approximativement le long de la ligne droite coulissante (A), et que leur mouvement soit en opposition de phase par rapport au mouvement de va-et-vient de la perche (17) ; ledit dispositif (1) étant **caractérisé en ce que** la première roue (9) présente un premier arbre de rotation (27) qui fait saillie vers l'extérieur et qui présente des premiers moyens respectifs formant roulement (29) logés dans un siège respectif d'un corps de carter de vilebrequin (31) du dispositif (1); et **en ce que** les moyens formant vilebrequin (11) présentent un second arbre de rotation (35) qui fait saillie vers l'extérieur et qui présente des deuxièmes moyens respectifs formant roulement (37) logés dans un siège respectif du corps de carter de vilebrequin (31), les moyens formant vilebrequin (11) présentant en outre une broche de bielle (39), de la tête de bielle d'une bielle (13), qui présente une extrémité fixée à la première roue (9) ; et **en ce que** la seconde roue (21) est connectée d'une façon en rotation libre au second arbre de rotation (35) par des troisièmes moyens formant roulement (41) ; les axes géométriques de rotation des premier (27) et second (37) arbres de rotation, des premier (29), deuxième (37) et troisième (41) moyens formant roulement et de la seconde roue (21), coïncident avec l'axe géométrique de rotation (R) de la première roue (9) et des moyens formant vilebrequin (11) ; l'axe géométrique longitudinal de la broche de bielle (39) est parallèle à l'axe géométrique de rotation (R) et espacé de celui-ci.

2. Dispositif selon la revendication 1, **caractérisé en ce que** les premiers (23) et seconds (25) moyens formant masse sont des secteurs annulaires circulaires, et ils sont fixés sur les côtés opposés (9, 21) des roues (9, 21); le pignon (5) présente un diamètre maximum compris entre 1/3 et 1/20, de préférence égal à 1/5 environ, du rayon extérieur de la roue (9, 21).

3. Dispositif selon la revendication 1, **caractérisé en ce qu'**il comprend un guide tubulaire (45) fixé au corps de carter de vilebrequin (31) de telle façon que son axe géométrique longitudinal coïncide avec la ligne droite coulissante (A), et attribué au mouvement coulissant de la perche (17), et **en ce que** le pignon (5) présente un arbre de rotation respectif supporté par des moyens formant roulement logés dans des sièges réalisés dans le corps de carter de vilebrequin (31), ledit pignon (5) étant connecté au moteur (3) par des moyens formant embrayage, de préférence du genre embrayage centrifuge.

4. Dispositif selon l'une quelconque des revendications précédentes, **caractérisé en ce que** les premiers (23) et seconds (25) moyens formant masse sont connectés à la première (9) ou à la seconde (21) roue respective d'une manière réglable de façon à modifier ou à fixer la distance entre les centres des masses des premiers (23) et seconds (25) moyens formant masse à partir de l'axe de rotation géométrique (R).

5. Dispositif selon la revendication 4, **caractérisé en ce que** les extrémités des premiers (23) et seconds (25) moyens formant masse qui anticipent ou suivent les rotations des mêmes moyens formant masse (23, 25), présentent des sièges de passage traversant respectif d'un premier (51) et d'un second (53) axes de pivotement destinés à connecter en pivotement libre les premiers (23) et seconds (25) moyens formant masse aux première (9) et seconde (21) roues respectives, chaque roue présentant des premiers (55) et seconds (57) moyens de réglage destinés à régler l'angle de pivotement des premiers (23) et seconds (25) moyens formant masse.

6. Dispositif selon la revendication 5, **caractérisé en ce que** les premiers (55) et seconds (57) moyens de réglage se composent de moyens élastiques, chacun d'eux agissant entre une première (9) ou une seconde (21) roue respective et les premiers (23) ou seconds (25) moyens respectifs formant masse et présentant une force élastique centripète qui contraste le déplacement centrifuge des centres de masse des moyens formant masse (23, 25).

7. Dispositif selon la revendication 6, **caractérisé en ce que** la première (9) ou la seconde (21) roue présente des première (61, 63) et seconde (65, 67) paires d'arrêts respectives, chaque paire étant conçue de façon à rencontrer les premiers (23) ou les seconds (25) moyens formant masse respectifs de manière à arrêter ces derniers à une condition de distance maximum ou minimum du centre de masse respectif à partir de l'axe de rotation géométrique (R).

8. Dispositif selon la revendication 6, **caractérisé en ce que** les premiers (55) et seconds (57) moyens de réglage sont sélectionnés dans le groupe constitué par : des moyens formant vis, des moyens formant joint fixe ou des moyens d'arrêt multiples réglables associés à la première (9) ou à la seconde (21) roue de façon à verrouiller les premiers (23) ou les seconds (25) moyens formant masse, le centre de masse respectif se situant à des distances prédéfinies à partir de l'axe de rotation géométrique (R).

9. Dispositif selon l'une quelconque des revendications précédentes, **caractérisé en ce que** la perche (17) présente un ensemble de tiges mises en prise de manière mutuelle et présente, au niveau d'une extrémité, un connecteur de support de broche (15), et au niveau de l'extrémité opposée, les moyens formant crochet (49) conçus de façon à rencontrer des branches de manière à provoquer une chute d'olives ou d'autres fruits ; les tiges mises en prise et les moyens formant crochet (49) étant fixes ou pouvant être interchangés.
